# EUROPEAN PATENT SPECIFICATION

(11) **EP 4 072 840 B1**
(45) Date of publication and mention of the grant of the patent: **20.03.2024**
(21) Application number: 20842025.7
(22) Date of filing: 24.11.2020
(51) Int. Cl.: B29D 30/00, B29D 30/06

(54) **METHOD FOR ASSOCIATING IDENTIFICATION INFORMATION WITH A TYRE BEING PROCESSED, AND APPARATUS OPERATING ACCORDING TO SAID METHOD**
VERFAHREN ZUM ZUORDNEN EINER IDENTIFIKATIONSINFORMATION MIT EINEM REIFEN WÄHREND DESSEN FERTIGUNG, UND VORRICHTUNG ZU DIESEM VERFAHREN
MÉTHODE D'ASSOCIATION D'UNE INFORMATION D'IDENTIFICATION DE PNEUMATIQUE LORS DE SA PRODUCTION, ET DISPOSITIF ASSOCIÉ

(30) Priority: 09.12.2019 IT 201900023346
(43) Date of publication of application: 19.10.2022
(73) Proprietor: Pirelli Tyre S.p.A., 20126 Milano (IT)
(72) Inventor: BOFFA, Vincenzo, 20126 Milano (IT); MERVIC, Stefano Rosario, 20126 Milano (IT); TRABATTONI, Andrea, 20126 Milano (IT); FISCHER, Ralf, 64747 Breuberg/Odw (DE)
(74) Representative: Metroconsult Srl
(86) International application number: PCT/IB2020/061077
(87) International publication number: WO 2021/116807

(56) References cited:
- US-A1- 2016 092 814

## Description

The present invention relates to a method for associating identification information with a tyre being processed.

The present invention also relates to an apparatus for associating identification information with a tyre being processed.

A tyre for vehicle wheels generally comprises a carcass structure including at least one carcass ply having respectively opposite end flaps in engagement with respective annular anchoring structures, generally referred to as "bead wires", integrated into the regions usually identified as "beads", the inside diameter of which substantially matches a so-called "fitting diameter" of the tyre for fitting it onto a respective rim. The tyre also comprises a crown structure including at least one belt band located in a radially external position relative to the carcass ply, and a tread band which is radially external to the belt band. Between the tread band and the belt band(s) a so-called "underlayer" of elastomeric material may be interposed, the properties of which are suitable for providing a stable union between the belt band(s) and the tread band. In addition, respective sidewalls of elastomeric material are applied to the side surfaces of the carcass structure, each extending from one of the side edges of the tread band up to the respective annular bead anchoring structure. In tyres of the "tubeless" type, the carcass ply is internally coated with a layer of elastomeric material, preferably a butyl-based one, commonly referred to as "liner", which has optimal air tightness properties and extends from one bead to the other.

The term "elastomeric material" refers to a compound comprising at least one elastomeric polymer and at least one reinforcing filler. Preferably, said compound also comprises additives such as, for example, a cross-linking agent and/or a plasticizer. Thanks to the presence of the cross-linking agent, said material can be cross-linked by heating to form the final product.

A "component" or "structural component" of a tyre is meant to be any portion of the latter which can perform a specific function, or a part thereof. Tyre components include, for example: liner, underliner, sidewall inserts, bead wires, filler inserts, anti-abrasive layer, sidewalls, carcass ply(ies), belt layer(s), tread band, tread band underlayer, underbelt inserts, etc., or a part thereof.

A "tyre being processed" is a tyre that has not yet completed the building process, i.e. in which the structural components have not all been assembled together yet, and/or which has not yet undergone all the checks and/or operations required prior to the moulding and curing processes.

The terms "building", "building process", "building operations" refer to all those operations (including manufacturing, checking and verification operations) undergone by the tyre being processed prior to moulding and curing.

The term "tyre", without any further specification, may refer either to a tyre being processed or to a moulded and cured tyre.

An "RFID tag" refers to an identification device provided with a memory and a transceiver module. The memory stores at least one identification code univocally associated with the RFID tag. The transceiver module operates in accordance with the RFID (Radio Frequency IDentification) technology.

A "passive RFID tag" indicates an RFID tag which, when interrogated by an RFID reading system, will respond by communicating data contained in its own memory. Preferably, a passive RFID tag does not have a battery or an autonomous power supply source. It is powered by the radiation emitted by the RFID reading system.

A "reading system" refers to a device or a set of devices configured for communicating, via RFID technology, with one or more RFID tags. Preferably, each reading device is configured for emitting, with a certain periodicity, a reading signal. When an RFID tag receives such reading signal, it will respond by communicating data contained in its own memory.

Document EP 2 186 658 A1 describes a tyre and electronic device assembly, and a method for incorporating an electronic device into a tyre. The assembly comprises an electronic device including an RFID tag, a dipole antenna, and a compound having permittivity and conductivity compatible with the operation of the dipole antenna. The RFID tag and at least a portion of the dipole antenna are embedded within the compound. The RFID tag is operationally mounted in the tyre between an apex component positioned above one of the two beads of said tyre and a sidewall, or at a predetermined distance above an ending of a ply layer perpendicular to the parallel cords of said ply layer.

Document EP 2 524 818 A2 describes a tyre and embedded RFID tag assembly, and a method for manufacturing the same. The assembly comprises a carcass; the carcass comprises at least one radially inner ply component extending around a bead core to a ply turn-up portion. The ply turn-up portion extends radially outwards from the bead core to a ply turn-up end. The carcass further comprises a barrier layer positioned axially inward from and adjacent to the ply component. The barrier layer does not extend around the bead core. The assembly comprises an RFID tag embedded within the carcass between the barrier layer and the ply component in a lower sidewall region between 10% and 40% of the tyre section height.

Document US 2016/092814 A1 discloses a tyre production management system using RFID tag.

The Applicant observes that the presence and the proper operation of tyre-mounted RFID tags are extremely important, especially for tyre identification, traceability and verification purposes. The Applicant observes, in particular, that it is not essentially possible to make up *a posteriori,* i.e. after the tyre building and curing processes, for the absence or malfunctioning of an RFID tag. In the event that an RFID tag is absent or is not operating correctly, the tyre will have to be discarded.

The Applicant has verified that some of the problems that may arise in regard to the association between a tyre and an RFID tag are essentially the following:
- the RFID tag is unexpectedly not mounted on the tyre;
- the RFID tag is mounted, but does not work or works incorrectly;
- multiple RFID tags are mounted, instead of just one; such redundancy may lead to criticalities concerning the overall production costs; furthermore, if the information contained in the RFID tags is not the same, correspondence between said information (located on the RFID tags) and the tyre is lost.

The Applicant also observes that the contexts in which RFID tags are associated with tyres and undergo reading/writing operations are typically industrial structures, where there is a significant presence of metallic bodies that contribute to creating an environment that promotes reflections of electromagnetic fields. This is an additional risk factor that may lead to errors when reading/writing RFID tags associated, or to be associated, with tyres.

In this frame, the Applicant has felt the need for reducing the occurrence of situations in which a tyre has to be discarded because it does not have a properly operating RFID tag.

The Applicant has then perceived that, in order to avoid the above-mentioned problems, it is appropriate to check as early as possible for any defects/malfunctions related to the RFID tag that must be present on the tyre, and to ensure that the RFID tag undergoing the reading/writing operation is actually associated with a corresponding tyre.

In particular, as perceived by the Applicant, the verification of the presence of the RFID tag and of the proper operation thereof, as well as the verification of the association with the respective tyre, should be carried out in such a way as to avoid building and/or curing any tyres lacking a functional, specification-compliant RFID tag.

The Applicant has thus found that, by making a first check either before or during the building of the tyre being processed, and a second check at the end of the building phase and before the curing phase, it is possible to verify in an exact and accurate manner the presence and the correct operation of the RFID tag associated with a corresponding tyre. Furthermore, by verifying that the RFID tag detected during the first check is exactly the one detected during the second check, it is possible to make sure that such RFID tag is actually the one associated with the tyre, and not, for example, another RFID tag that may be present nearby and detected by mistake.

In accordance with a first aspect, the invention relates to a method for associating identification information with a tyre being processed as claimed in claim 1.

The Applicant believes that it is thus possible to detect the absence or improper operation of the RFID tag in a timely manner, as well as to verify the actual association between the RFID tag and the tyre being processed.

In accordance with a further aspect, the invention relates to an apparatus for associating identification information with a tyre being processed as claimed in claim 10.

Under at least one of the above aspects, the present invention may have at least one of the following preferable features.

Preferably, it is envisaged to associate a further code with said tyre being processed.

Preferably, said further code is a barcode.

Preferably, it is envisaged to read said further code.

Preferably, it is envisaged that said identification information of said tyre being processed comprises said further code.

Preferably, it is envisaged to generate an alarm signal if said first reading operation does not allow obtaining said first identification code.

Preferably, it is envisaged to generate an alarm signal if said second reading operation does not allow obtaining said second identification code.

Preferably, it is envisaged to generate an alarm signal if said first identification code does not match said second identification code.

Preferably, it is envisaged that said first reading operation is executed by means of a first RFID tag reading device.

Preferably, it is envisaged that said second reading operation is executed by means of a second RFID tag reading device.

Preferably, it is envisaged to associate said RFID tag with a tyre component.

Preferably, it is envisaged to associate said RFID tag with said tyre component prior to associating said component with a tyre being processed.

Preferably, it is envisaged that said first reading device is located at a building station which executes at least one operation of building said tyre being processed.

Preferably, it is envisaged to associate said RFID tag with said tyre being processed.

Preferably, it is envisaged that said second reading device is located downstream of said building station.

Preferably, it is envisaged to execute a third reading operation.

Preferably, it is envisaged to execute said third reading operation after the curing of said tyre being processed.

Preferably, it is envisaged to obtain stored data by means of said third reading operation.

Preferably, it is envisaged to activate said processor in order to compare said stored data with said first identification code.

Preferably, it is envisaged to activate said processor in order to compare said stored data with said second identification code.

Preferably, it is envisaged to activate said processor in order to compare said stored data with said identification information.

Preferably, it is envisaged to activate said processor in order to generate an alarm signal if said stored data do not match said first identification code.

Preferably, it is envisaged to activate said processor in order to generate an alarm signal if said stored data do not match said second identification code.

Preferably, it is envisaged to activate said processor in order to generate an alarm signal if said stored data do not match said identification information.

Preferably, it is envisaged that said reading system comprises a first reading device.

Preferably, it is envisaged that said first reading device is located at a building station.

Preferably, it is envisaged that said reading system comprises a second reading device.

Preferably, it is envisaged that said second reading device is positioned downstream of a building station.

Preferably, it is envisaged that said first reading operation is executed by said first reading device.

Preferably, it is envisaged that said second reading operation is executed by said second reading device.

Preferably, a detection device is employed.

Preferably, it is envisaged that said detection device is configured for detecting a further code.

Preferably, it is envisaged that said further code is associated with said tyre being processed.

Preferably, it is envisaged that said further code is a barcode.

Preferably, it is envisaged that said processor is configured for activating said detection device.

Preferably, it is envisaged that said processor is configured for activating said detection device in order to detect said further code.

Preferably, it is envisaged that said processor is configured for supplying said further code to said RFID tag writing device.

Preferably, it is envisaged that said processor is configured for supplying said further code to said RFID tag writing device in order to include said further code in said identification information.

Preferably, it is envisaged that said processor is configured for generating an alarm signal if said first reading operation does not allow obtaining said first identification code.

Preferably, it is envisaged that said processor is configured for generating an alarm signal if said second reading operation does not allow obtaining said second identification code.

Preferably, it is envisaged that said processor is configured for generating an alarm signal if said first identification code turns out to not match said second identification code.

Preferably, it is envisaged that said processor is configured for activating said reading system in order to execute a third reading operation.

Preferably, it is envisaged that said processor is configured for activating said reading system in order to execute said third reading operation after the curing of said tyre being processed.

Preferably, it is envisaged that said processor is configured for obtaining stored data by means of said third reading operation.

Preferably, it is envisaged that said processor is configured for comparing said stored data with said first identification code.

Preferably, it is envisaged that said processor is configured for comparing said stored data with said second identification code.

Preferably, it is envisaged that said processor is configured for comparing said stored data with said identification information.

Preferably, it is envisaged to activate said processor in order to generate an alarm signal if said stored data do not match said first identification code.

Preferably, it is envisaged to activate said processor in order to generate an alarm signal if said stored data do not match said second identification code.

Preferably, it is envisaged to activate said processor in order to generate an alarm signal if said stored data do not match said identification information.

Preferably, a third reading device is employed.

Preferably, it is envisaged that said third reading operation is executed by said third reading device.

Further features and advantages will become more apparent in the light of the following detailed description of a preferred, but non-limiting, embodiment of the invention. Such description is provided herein with reference to the annexed drawings, which are also supplied by way of non-limiting example, wherein:
- Figure 1 shows a simplified block diagram of a building station where some steps of the method according to the present invention are carried out;
- Figure 2 shows a simplified block diagram of a curing station where some steps of the method according to the present invention are carried out;

- Figure 3 shows a block diagram of an apparatus according to the present invention;
- Figures 4a-4b show a flow chart representative of an embodiment of the method according to the present invention.

With reference to the annexed drawings, 1 designates as a whole an apparatus for associating identification information X with a tyre 30 being processed.

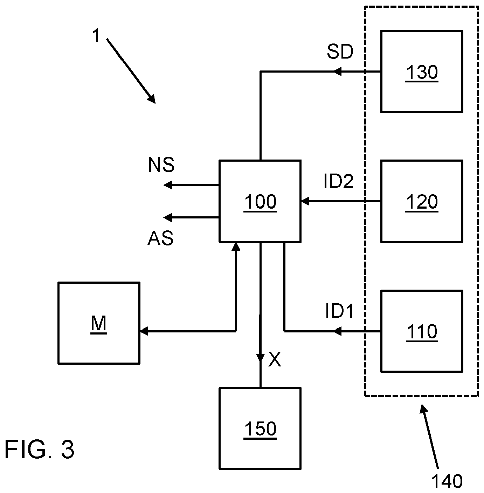

The apparatus 1 (Fig. 3) comprises a reading system 140, configured for reading RFID tags.

Preferably, the reading system 140 is associated with a building station 300, which is configured for executing at least one operation of building a tyre 30 being processed. Downstream of the building station 300 there is a curing station 400, prearranged for executing an operation of curing and moulding the tyre 30 being processed.

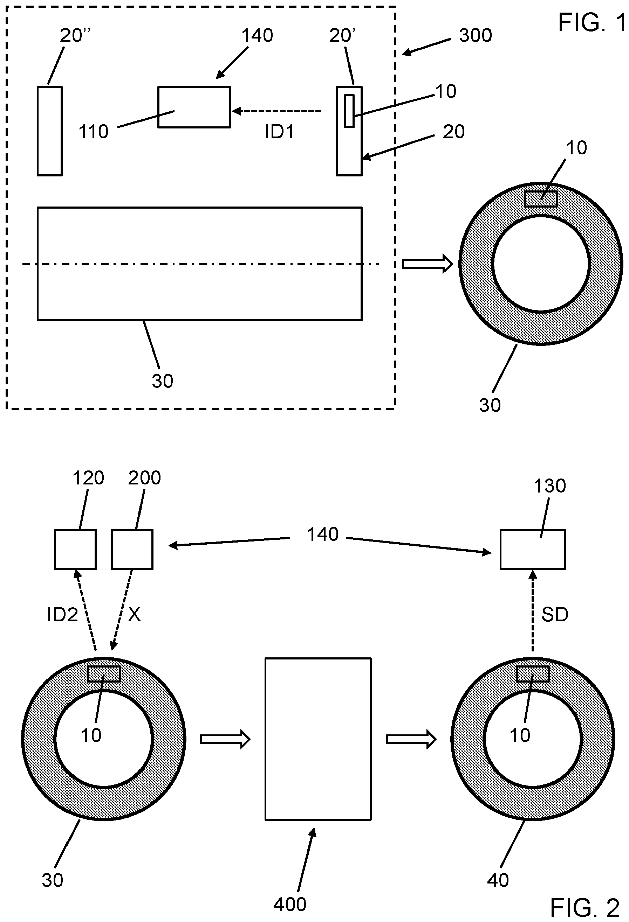

The building station 300 is schematized in Figure 1; the curing station 400 is schematized in Figure 2.

Preferably, the reading system 140 comprises a first reading device 110.

Preferably, the first reading device 110 is located at the building station 300.

Preferably, the reading system 140 comprises a second reading device 120.

Preferably, the second reading device 120 is positioned downstream of the building station 300, and in particular upstream of the curing station 400.

In other words, the second reading device 120 is preferably interposed between the building station 300 and the curing station 400.

The apparatus 1 further comprises a processor 100.

The processor 100 is configured for co-operating with the reading system 140 to read identification codes of RFID tags that are present, for example, at the building station 300.

In particular, before a component 20 is associated with a tyre 30 being processed, an RFID tag 10 is associated with such component 20.

In a different preferred embodiment, an RFID tag 10 is directly associated with a tyre 30 being processed when all of its structural components have been assembled or, more generally, at any time during the building thereof.

In one embodiment, the component 20 is a bead wire 20'.

During the building operations, two bead wires 20', 20" are associated with the tyre 30 being processed, as schematically shown in Figure 1. However, only one of the two bead wires (i.e. the one identified by reference numeral 20') is provided with the RFID tag 10. This is necessary for limiting the costs and for ensuring that the tyre 30 being processed and the resulting finished tyre 40 are associated with a single identification code.

In general, the Applicant observes that it is preferable that only one component per tyre is equipped with a respective RFID tag.

The RFID tag 10 can be associated with the component 20 by means of a fixing operation, to be executed either manually or in an automated manner.

The RFID tag 10 is preferably of the passive type.

In the memory of the RFID tag 10, the data are preferably structured as shown in the following Table 1:

**TABLE 1**

| **Binary code** | **MEMORY BANK** | **USE** |
|---|---|---|
| 00 | RESERVED | This memory bank is the password management memory bank, and contains the Access password and the "Kill" password. |
| 10 | TID | TID is a unique part and serial number of the RFID tag, and is permanently locked by the chip manufacturer. |
| | | This memory bank is not used by tyre manufacturers and is locked by the chip manufacturer. |
| 01 | UII | The unique item identifier is written in this memory bank under the tyre manufacturer's responsibility. |
| 11 | User Memory | The user memory is optional. When available, the parties involved may use it under their own responsibility. |

There are preferably four memory areas ("*memory banks*"), respectively marked with the binary address codes "00", "10", "01", "11".

In the following, reference will be made to a first memory area TID and a second memory area UII of the RFID tag 10.

Preferably, the first memory area TID is the one that is marked, in the above table, with the binary code "10".

In particular, the datum contained in the first memory area TID is a unique serial number of the RFID tag, and cannot be either modified or overwritten.

Preferably, the second memory area UII is the one that is marked, in the above table, with the binary code "01".

In particular, the datum contained in the second memory area UII is written by the tag user - in this case, the tyre manufacturer - and preferably identifies the object whereon the RFID tag is affixed. Before the user executes a writing operation, the second memory area UII typically contains a code having no particular meaning, which is set during the production of the RFID tag.

The datum contained in the first memory area TID (*Tag ID*) is the one which, as will become more apparent below, is preferably read during the checks carried out by means of the present invention. The datum contained in the second memory area UII (*Unique Item Identifier*) is preferably the memory area which is written to after said checks. From an operational viewpoint, however, it is envisaged that only the second memory area UII is used, the first memory area TID being read in order to store its content for possible future verifications.

The processor 100 is configured for activating the reading system 140, and in particular the first reading device 110, in order to execute a first operation of reading the RFID tag 10.

The first reading operation is executed either before or during the building of the tyre 30 being processed.

In particular, the first reading operation may be executed before the component 20 is associated with the tyre 30 being processed, or it may be executed on the tyre 30 being processed which, at any time during the building process, has been associated with the RFID tag 10, or it may be executed before the RFID tag 10 is associated with the tyre 30 being processed or with a component thereof.

The first reading operation is executed before the building operations are completed.

The first reading operation allows obtaining a first identification code ID1 of the RFID tag 10.

As aforesaid, such first identification code ID1 may be the Tag ID contained in the first memory area TID.

In a different embodiment, the first identification code ID1 may be the datum contained in the second memory area UII.

The first identification code ID1 is stored by the processor 100 into a memory M associated therewith.

The processor 100 is also configured for activating the reading system 140, and in particular the second reading device 120, in order to execute a second reading operation.

The second reading operation is executed at the end of the building and before the curing of the tyre 30 being processed.

The second reading operation returns a second identification code ID2.

The processor 100 then makes a comparison between the first identification code ID1 and the second identification code ID2.

If the first identification code ID1 matches the second identification code ID2, and in particular if it is identical to the second identification code ID2, then the processor 100 activates an RFID tag writing device 200.

A writing operation is thus carried out, and identification information X of the tyre 30 being processed is written to the RFID tag 10.

From a practical viewpoint, the comparison between the first identification code ID1 and the second identification code ID2 makes it possible to verify if the tyre 30 being processed, which comprises or is associated with the component 20 equipped with the RFID tag 10, is really the one from which the tyre 30 exiting the building station 300 has been obtained. More in general, the comparison between the first identification code ID1 and the second identification code ID2 makes it possible to verify if the tyre 30 being processed has that very RFID tag 10 which was read during said first reading operation (and therefore assigned to that specific tyre 30 being processed). In the affirmative case, the process is being carried out correctly, and the identification information X can be written to the RFID tag 10. Otherwise, a problem has occurred and, as will be further explained below, an alarm will be generated.

Preferably, the RFID tag writing device 200 is positioned in the vicinity of the second reading device 120. In one embodiment, the RFID tag writing device 200 may be associated with or integrated into the second reading device 120, forming therewith a single RFID reading/writing apparatus.

The identification information X preferably comprises data representative of the manufacturer of the tyre 30 being processed and of the finished tyre 40 that will derive therefrom, of the production plant, of the tyre type, and of a progressive number, which allows distinguishing all tyres of the same type being manufactured by the same manufacturer in the same plant.

Preferably, the identification information X is written to the second memory area UII of the RFID tag 10.

Preferably, the identification information X is structured in accordance with the SGTIN-96 standard, as shown in the following Table 2:

**TABLE 2**

| | UII | | | | | |
|---|---|---|---|---|---|---|
| EPC GS1 SGTIN-96 | Header | Filter Value | Partition | Company Prefix | Item Reference | Serial Number |
| Length (bits) | 8 | 3 | 3 | da 20 a 40 | da 24 a 4 | 38 |

| Example | | | | | | |
|---|---|---|---|---|---|---|
| Value (binary) | 00110000 | 000 | 010 (for a 34-bit GS1 Company Prefix and a 10-bit Item Reference) | 010...01 (34 bits) | 010...01 (10 bits) | 010...01 (38 bits) |

As can be seen, six fields are provided:
- first and second fields of general nature (*"Header"* and *"Filter Value"*)*;*
- a third field (*"Partition"*) identifying how the two following fields have been subdivided, in terms of number of bits;
- a fourth field (*"Company Prefix"*) univocally identifying the company, i.e. the tyre manufacturer;
- a fifth field (*"Item Reference"*) univocally identifying the product type;
- a sixth field (*"Serial Number"*), which is a progressive number univocally identifying that single product among other products of the same type.

Preferably, the identification information X is written on the RFID tag 10 in accordance with the ISO DIS20909, ISO DIS 20910, ISO DIS 20911 and ISO DIS 20912 standards.

In one embodiment, the identification information X is generated by the processor 100 - or by another apparatus associated therewith and belonging, together with the processor 100, to the plant management system.

In one embodiment, it is envisaged that at least a part of the identification information X can be detected directly from the tyre 30 being processed.

More in detail, in some plants it is envisaged that a further code FC, e.g. a barcode, is affixed (e.g. glued) to each tyre 30 being processed. By means of a suitable detection device 150 (e.g. a barcode reader) included in the apparatus 1, the processor 100 can read said further code FC and enter the data thereof into the identification information X, so that such data will be written to the RFID tag 10.

In this way it is advantageously possible to keep the tyre identification by barcodes aligned with the tyre identification by RFID tags.

As aforesaid, in the case wherein the first identification code ID1 is read from the second memory area UII, the content of the first memory area TID will also be read and stored - even though it will not be used for the comparison with the second identification code ID2. Reading and storing the content of the first memory area TID may turn out to be useful, for example, for future verifications in order to identify any imitation tyres.

In one embodiment, it is envisaged that the processor 100 is configured for acting, by default, upon the second memory area UII - using the content thereof to obtain the first identification code ID1 and the second identification code ID2 and to make the necessary comparisons, while still reading and storing also the content of the first memory area TID. Preferably, the processor 100 is configured for verifying that, among the various distinct RFID tags being read, there are not two of them with a matching, i.e. identical, content of the second memory area UII. If correspondence/identicalness is detected, then the datum cannot be used for discerning one tyre from another, and in such a case the processor 100 is configured for using, for the above-described comparisons, the content of the first memory area TID.

Advantageously, it is envisaged that the processor 100 can generate an alarm signal AS in at least one of the following cases:
- the first reading operation does not allow obtaining the first identification code ID1;
- the second reading operation does not allow obtaining the second identification code ID2;
- the first identification code ID1 does not match the second identification code ID2.

The first case may occur, for example, when the RFID tag 10 has not been associated with the component 20 (e.g. because of an error of the device or of the entrusted operator), or when the RFID tag 10 is faulty/defective and does not work - and hence cannot provide the first identification code ID1. The first case may also occur when the reading system 140, and in particular the first reading device 110, receives two distinct identification codes, e.g. because, due to an error, both bead wires to be used in the building process have been provided with an RFID tag. The processor 100 will not therefore be able to obtain a single identification code - i.e. the first identification code ID1, and will generate an alarm as a result.

The second case may occur, for example, when the RFID tag 10 fails during the building process, or when - due to an error in the process management - a tyre has been built which has no RFID tag.

The third case may occur, for example, when the green tyres downstream of the building station 300 and upstream of the curing station 400 have not been not arranged/handled correctly, and thus the apparatus 1 does not find, downstream of the building station 300, that very same tyre 30 which was previously being built.

The alarm signal AS may be, for example, an audible and/or visual alarm, so as to draw the attention of an operator, who will then be able to take action.

Preferably, the reading system 140 comprises a third reading device 130, located downstream of the curing station 400.

Advantageously, the processor 100 is configured for activating the reading system 140, and in particular the third reading device 130, in order to execute a third reading operation.

The third reading operation allows obtaining stored data SD. Preferably, the stored data SD comprise a first portion, consisting of the identification code of the RFID tag on the finished tyre 40, and a second portion consisting of the data written in the memory of the same RFID tag.

The processor 100 makes a comparison between such stored data SD and at least one of the first identification code ID1, the second identification code ID2 and the identification information X.

In particular, the first portion of the stored data SD is compared with at least one of the first identification code ID1 and the second identification code ID2.

From a practical viewpoint, a comparison is preferably made with either the first identification code ID1 or the second identification code ID2: at this point of the process, it has already been verified that the first identification code ID1 is equal to the second identification code ID2, and a comparison with both of them might prove redundant.

This comparison makes it possible to verify that the finished tyre 40 exiting the curing station 400 corresponds to the tyre 30 previously built.

The second portion of the stored data SD is compared with the identification information X, i.e. the information previously written to the memory of the RFID tag 10.

This comparison makes it possible to verify that the data contained in the RFID tag 10 are still correctly stored. In brief, it is verified that the RFID tag 10 has undergone no damage during the curing and moulding operation.

If no correspondence is detected between the data being compared, the processor 100 will generate an alarm signal AS to report the trouble and preferably call the attention of an operator.

Conversely, if correspondence is found between the data being compared, then the processor 100 may generate a simple notification signal representative of the fact that the check has been successful.

In one embodiment, it is envisaged that a comparison is only made between the data taken from the re-writable memory of the RFID tag mounted on the finished tyre 40 and the identification information X.

In one embodiment, the processor 100 is configured for generating an alarm in the event that, within a given time of reading the second identification code ID2 or writing the identification information X, the same datum is not read downstream of the curing station 400. In other words, if the readings taken by the third reading device 130 do not provide, within a predefined time, any data corresponding to the second identification code ID2 or to the identification information X, the processor 100 will signal a faulty condition. This is, in fact, a circumstance in which a tyre 30 being processed, after having been built, has not been brought to the curing station 400 and subjected, as expected, to the curing and moulding operations.

In one embodiment, it is envisaged that two or more RFID tags are affixed to each tyre being processed. Preferably, each one of such two or more RFID tags contains, in its second memory area UII, the same identification data of said tyre being processed. Preferably, in this case the checks performed may consider as acceptable the presence of two or more RFID tags on the same tyre being processed, provided that such two or more RFID tags contain the same identification data of the tyre being processed.

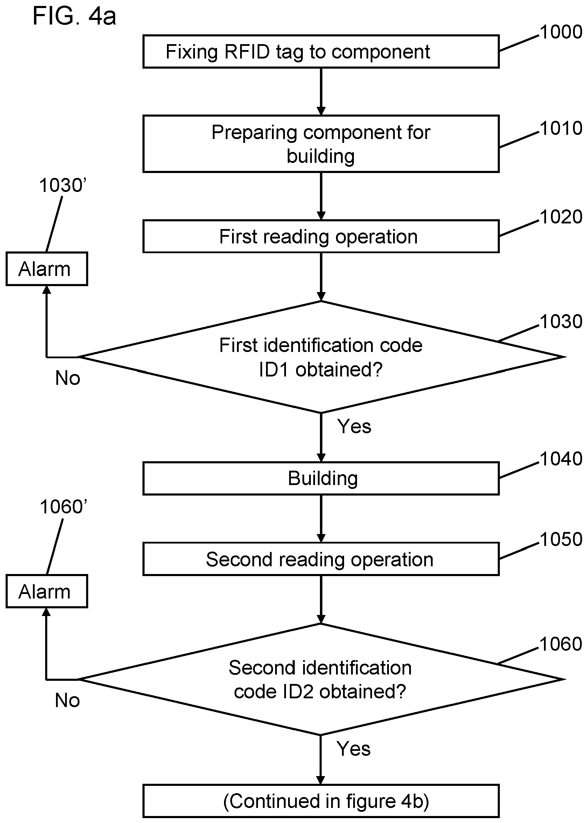

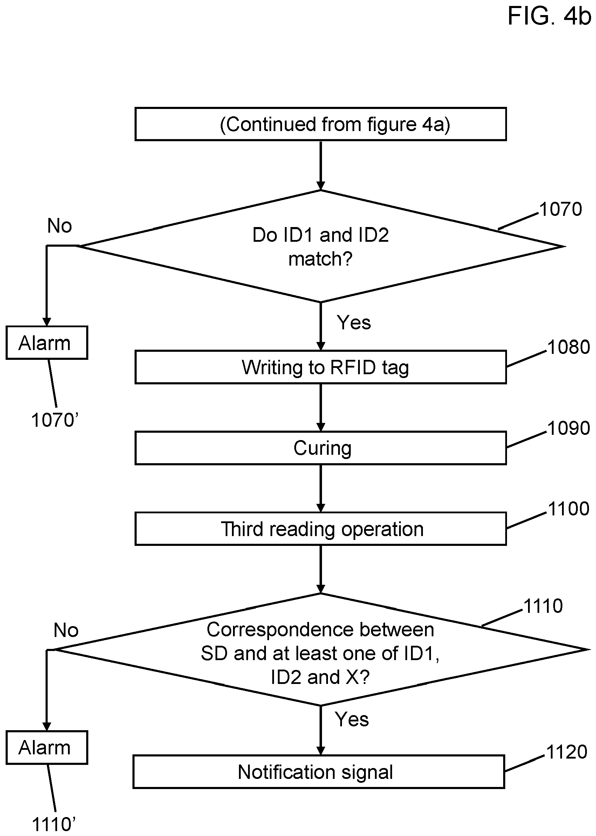

Figures 4a-4b show a flow chart that illustrates the operations that can be carried out in an embodiment of the method according to the present invention.

At block 1000, the RFID tag 10 is fixed onto the component 20.

At block 1010, the component 20 is prepared for the building process, in particular for being associated with the tyre 30 being processed.

At block 1020, the first reading operation is executed, preferably by means of the first reading device 110.

At block 1030, a check is made to see that the first identification code ID1 is obtained. If the first identification code ID1 is obtained correctly, the procedure goes to the next block, and the building operation is carried out (block 1040). Otherwise, if the first identification code ID1 is not obtained (i.e. the detection system 140 receives no reply, or receives more than one reply and cannot therefore obtain a single first identification code ID1), then an alarm signal AS is generated (block 1030').

Note that, in the flow chart of Figure 4a, the block 1020, indicating the first reading operation, is shown to be separate from and to precede the building operation (block 1040). However, as aforesaid, in one embodiment it is envisaged that the first reading operation may be executed during the building operation.

At block 1050, at the end of the building operation, the second reading operation is executed, preferably by means of the second detection device 120, in order to obtain the second identification code ID2.

At block 1060 a first check is made to see that the second code ID2 is detected. If it is not detected, an alarm signal AS is generated (block 1060'). Otherwise, i.e. if the second identification code ID2 is detected correctly, the procedure can continue with the next block.

At block 1070, the second identification code ID2 is compared with the first identification code ID1.

If the two codes match (i.e. in practical terms, if the two codes are identical), then the procedure can go on to the next block.

Otherwise, i.e. if the two codes do not match (the first identification code ID1 is different from the second identification code ID2), an alarm signal AS is generated (block 1070').

At block 1080, the RFID tag 10 is written to. In particular, the identification information X is written, by means of the RFID tag writing device 200, into the memory of the RFID tag 10.

At block 1090, the operation of curing and moulding the tyre 30 being processed is carried out, thereby obtaining the finished tyre 40.

At the end of the curing and moulding phase, at block 1100 the third reading operation is executed, preferably by means of the third reading device 130.

At block 1110, the stored data SD obtained by means of the third reading operation are compared with at least one of the first identification code ID1, the second identification code ID2 and the identification information X.

If the comparison has a positive outcome, i.e. if there is correspondence between the data being compared, then the processor 100 may generate a simple notification signal NS to confirm that the process has been carried out correctly (block 1120).

Conversely, if no correspondence is detected between the stored data SD and at least one of the first identification code ID1, the second identification code ID2 and the identification information X, then an alarm signal is generated (block 1110').

In a different preferred embodiment of the invention, the blocks 1000 and 1010 may be omitted. In such a case, the first reading operation is executed on an RFID tag 10 that has not yet been affixed to any component 20 prior to the latter being assembled to the tyre 30 being processed.

It should be noted that, for the sake of simplicity, reference has been made in the above description to a single processor 100. The Applicant points out that it is nevertheless possible, within the scope of the invention, to employ two or more processors - whether integrated into one device or distributed over distinct devices - in order to carry out the described operations. Likewise, the memory M may be implemented as one or more storage devices, appropriately associated with the processor(s) in use.

## Claims

1. Method for associating identification information with a tyre (30) being processed, comprising:
associating an RFID tag (10) with said tyre (30) being processed;
executing, either before or during the building of said tyre (30) being processed, a first operation of reading said RFID tag (10) in order to obtain a first identification code (ID1) from said RFID tag (10);
at the end of said building and prior to curing said tyre (30) being processed, executing a second reading operation in order to obtain a second identification code (ID2);
further **characterized by** :
activating a processor (100) in order to make a comparison between said first identification code (ID1) and said second identification code (ID2);
if said first identification code (ID1) matches said second identification code (ID2), activating an RFID tag writing device (200) for executing a writing operation in order to write identification information (X) of said tyre (30) being processed on said RFID tag (10).

2. Method according to claim 1, comprising:
associating a further code (FC) with said tyre (30) being processed;
reading said further code (FC);
wherein said identification information (X) of said tyre (30) being processed comprises said further code (FC).

3. Method according to any one of the preceding claims, comprising generating an alarm signal (AS) in at least one of the following cases:
said first reading operation does not allow obtaining said first identification code (ID1);
said second reading operation does not allow obtaining said second identification code (ID2);
said first identification code (ID1) does not match said second identification code (ID2).

4. Method according to any one of the preceding claims, wherein said first reading operation is executed by means of a first RFID tag reading device (110) and said second reading operation is executed by means of a second RFID tag reading device (120).

5. Method according to any one of the preceding claims, wherein said RFID tag (10) is associated with a component (20) of a tyre, prior to associating said component (20) with a tyre (30) being processed.

6. Method according to claim 5, wherein said first reading device (110) is located at a building station (300) which executes at least one operation of building said tyre (30) being processed.

7. Method according to any one of claims 1 to 4, wherein said RFID tag (10) is associated with said tyre (30) being processed.

8. Method according to any one of claims 4 to 7, wherein said second reading device (120) is located downstream of said building station (300).

9. Method according to any one of the preceding claims, comprising:
executing, after the curing of said tyre (30) being processed, a third reading operation in order to obtain stored data (SD);
activating said processor (100) in order to compare said stored data (SD) with at least one of said first identification code (ID1), said second identification code (ID2) and said identification information (X);
if said stored data (SD) do not match at least one of said first identification code (ID1), said second identification code (ID2) and said identification information (X), generating an alarm signal (NS).

10. Apparatus for associating identification information with a tyre (30) being processed, comprising:
a reading system (140), configured for reading RFID tags;
a processor (100) configured for:
- activating said reading system (140) for executing, either before or during the building of a tyre (30) being processed, a first operation of reading an RFID tag (10) in order to obtain a first identification code (ID1) from said RFID tag (10);
**characterized in that** the processor (100) is further configured for :
- activating said reading system (140) for executing, at the end of said building and prior to curing said tyre (30) being processed, a second reading operation in order to obtain a second identification code (ID2);
- making a comparison between said first identification code (ID1) and said second identification code (ID2);
- if said first identification code (ID1) matches said second identification code (ID2), activating an RFID tag writing device (200) for executing a writing operation in order to write identification information (X) of said tyre (30) being processed on said RFID tag (10).

11. Apparatus according to claim 10, wherein said reading system (140) comprises a first reading device (110) and a second reading device (120);
wherein said first reading operation is executed by said first reading device (110), and said second reading operation is executed by said second reading device (120);
wherein said first reading device (110) is located at a building station (300);
wherein said second reading device (120) is located downstream of said building station (300).

12. Apparatus according to claim 10 or 11, comprising a detection device (150) configured for detecting a further code (FC) associated with said tyre (30) being processed;
wherein said processor (100) is configured for:
- activating said detection device (150) in order to detect said further code (FC);
- supplying said further code (FC) to said RFID tag writing device (200) in order to include said further code (FC) in said identification information (X).

13. Apparatus according to claim 10 or 11, wherein said processor (100) is configured for generating an alarm signal (AS) in at least one of the following cases:
said first reading operation does not allow obtaining said first identification code (ID1);
said second reading operation does not allow obtaining said second identification code (ID2);
said first identification code (ID1) does not match said second identification code (ID2).

14. Apparatus according to any one of claims 10 to 13, wherein said processor (100) is configured for:
activating said reading system (140) for executing, after the curing of said tyre (30) being processed, a third reading operation in order to obtain stored data (SD);
comparing said stored data (SD) with at least one of said first identification code (ID1), said second identification code (ID2) and said identification information (X);
generating an alarm signal (AS) if said stored data (SD) do not match at least one of said first identification code (ID1), said second identification code (ID2) and said identification information (X).

15. Apparatus according to claim 14, wherein said reading system (140) comprises a third reading device (130), said third reading operation being executed by said third reading device (130).

## Patentansprüche

1. Verfahren zum Zuordnen von Identifikationsinformationen zu einem zu bearbeitenden Reifen (30), das Folgendes umfasst:
Zuordnen eines RFID-Etiketts (10) zu dem zu bearbeitenden Reifen (30);
Ausführen, entweder vor oder während des Aufbaus des zu bearbeitenden Reifens (30), eines ersten Lesevorgangs des RFID-Etiketts (10), um einen ersten Identifikationscode (ID1) von dem RFID-Etikett (10) zu erhalten;
am Ende des Aufbaus und vor dem Aushärten des zu bearbeitenden Reifens (30), Ausführen eines zweiten Lesevorgangs, um einen zweiten Identifikationscode (ID2) zu erhalten;
ferner **gekennzeichnet durch**:
Aktivieren eines Prozessors (100), um einen Vergleich zwischen dem ersten Identifikationscode (ID1) und dem zweiten Identifikationscode (ID2) durchzuführen;
wenn der erste Identifikationscode (ID1) mit dem zweiten Identifikationscode (ID2) übereinstimmt, Aktivieren einer RFID-Etikett-Schreibvorrichtung (200) zum Ausführen eines Schreibvorgangs, um Identifikationsinformationen (X) des Reifens (30), der verarbeitet wird, auf das RFID-Etikett (10) zu schreiben.

2. Verfahren nach Anspruch 1, das umfasst:
Zuordnen eines weiteren Codes (FC) zu dem zu bearbeitenden Reifen (30);
Lesen des weiteren Codes (FC);
wobei die Identifikationsinformationen (X) des zu bearbeitenden Reifens (30) den weiteren Code (FC) umfassen.

3. Verfahren nach einem der vorhergehenden Ansprüche, das das Erzeugen eines Alarmsignals (AS) in mindestens einem der folgenden Fälle umfasst:
der erste Lesevorgang erlaubt es nicht, den ersten Identifikationscode (ID1) zu erhalten;
der zweite Lesevorgang erlaubt es nicht, den zweiten Identifikationscode (ID2) zu erhalten;
der erste Identifikationscode (ID1) stimmt nicht mit dem zweiten Identifikationscode (ID2) überein.

4. Verfahren nach einem der vorhergehenden Ansprüche, wobei der erste Lesevorgang mittels einer ersten RFID-Etikett-Lesevorrichtung (110) und der zweite Lesevorgang mittels einer zweiten RFID-Etikett-Lesevorrichtung (120) ausgeführt wird.

5. Verfahren nach einem der vorhergehenden Ansprüche, wobei das RFID-Etikett (10) einer Komponente (20) eines Reifens zugeordnet wird, bevor die Komponente (20) einem Reifen (30) zugeordnet wird, der verarbeitet wird.

6. Verfahren nach Anspruch 5, wobei sich die erste Lesevorrichtung (110) an einer Aufbaustation (300) befindet, die mindestens einen Vorgang zum Aufbau des zu bearbeitenden Reifens (30) ausführt.

7. Verfahren nach einem der Ansprüche 1 bis 4, wobei das RFID-Etikett (10) dem zu bearbeitenden Reifen (30) zugeordnet ist.

8. Verfahren nach einem der Ansprüche 4 bis 7, wobei die zweite Lesevorrichtung (120) stromabwärts der Aufbaustation (300) angeordnet ist.

9. Verfahren nach einem der vorhergehenden Ansprüche, das umfasst:
Ausführen, nach dem Aushärten des zu bearbeitenden Reifens (30), eines dritten Lesevorgangs, um gespeicherte Daten (SD) zu erhalten;
Aktivieren des Prozessors (100), um die gespeicherten Daten (SD) mit mindestens einem des ersten Identifikationscodes (ID1), des zweiten Identifikationscodes (ID2) und der Identifikationsinformationen (X) zu vergleichen;
wenn die gespeicherten Daten (SD) mit mindestens einem des ersten Identifikationscodes (ID1), des zweiten Identifikationscodes (ID2) und der Identifikationsinformationen (X) nicht übereinstimmen, Erzeugen eines Alarmsignals (NS).

10. Vorrichtung zum Zuordnen von Identifikationsinformationen zu einem zu bearbeitenden Reifen (30), die Folgendes umfasst:
ein Lesesystem (140), das zum Lesen von RFID-Etiketts konfiguriert ist;
einen Prozessor (100), der für Folgendes konfiguriert ist:
- Aktivieren des Lesesystems (140) zum Ausführen, entweder vor oder während des Aufbaus eines zu bearbeitenden Reifens (30), eines ersten Lesevorgangs eines RFID-Etiketts (10), um einen ersten Identifikationscode (ID1) von dem RFID-Etikett (10) zu erhalten;
**dadurch gekennzeichnet, dass** der Prozessor (100) ferner für Folgendes konfiguriert ist:
- Aktivieren des Lesesystems (140) zum Ausführen, am Ende des Aufbaus und vor dem Aushärten des zu bearbeitenden Reifens (30), eines zweiten Lesevorgangs, um einen zweiten Identifikationscode (ID2) zu erhalten;
- Durchführen eines Vergleichs zwischen dem ersten Identifikationscode (ID1) und dem zweiten Identifikationscode (ID2);
- wenn der erste Identifikationscode (ID1) mit dem zweiten Identifikationscode (ID2) übereinstimmt, Aktivieren einer RFID-Etikett-Schreibvorrichtung (200) zum Ausführen eines Schreibvorgangs, um Identifikationsinformationen (X) des Reifens (30), der verarbeitet wird, auf das RFID-Etikett (10) zu schreiben.

11. Vorrichtung nach Anspruch 10, wobei das Lesesystem (140) eine erste Lesevorrichtung (110) und eine zweite Lesevorrichtung (120) umfasst;
wobei der erste Lesevorgang durch die erste Lesevorrichtung (110) und der zweite Lesevorgang durch die zweite Lesevorrichtung (120) ausgeführt wird;
wobei sich die erste Lesevorrichtung (110) an einer Gebäudestation (300) befindet;
wobei die zweite Lesevorrichtung (120) stromabwärts von der Gebäudestation (300) angeordnet ist.

12. Vorrichtung nach Anspruch 10 oder 11, die eine Erfassungsvorrichtung (150) umfasst, die zum Erfassen eines weiteren Codes (FC) konfiguriert ist, der dem zu bearbeitenden Reifen (30) zugeordnet ist;
wobei der Prozessor (100) für Folgendes konfiguriert ist:
- Aktivieren der Erfassungsvorrichtung (150), um den weiteren Code (FC) zu erfassen;
- Zuführen des weiteren Codes (FC) zu der RFID-Etikett-Schreibvorrichtung (200), um den weiteren Code (FC) in den Identifikationsinformationen (X) zu enthalten.

13. Vorrichtung nach Anspruch 10 oder 11, wobei der Prozessor (100) dafür konfiguriert ist, in mindestens einem der folgenden Fälle ein Alarmsignal (AS) zu erzeugen:
der erste Lesevorgang erlaubt es nicht, den ersten Identifikationscode (ID1) zu erhalten;
der zweite Lesevorgang erlaubt es nicht, den zweiten Identifikationscode (ID2) zu erhalten;
der erste Identifikationscode (ID1) stimmt nicht mit dem zweiten Identifikationscode (ID2) überein.

14. Vorrichtung nach einem der Ansprüche 10 bis 13, wobei der Prozessor (100) für Folgendes konfiguriert ist:
Aktivieren des Lesesystems (140) zum Ausführen, nach dem Aushärten des zu bearbeitenden Reifens (30), eines dritten Lesevorgangs, um gespeicherte Daten (SD) zu erhalten;
Vergleichen der gespeicherten Daten (SD) mit mindestens einem des ersten Identifikationscodes (ID1), des zweiten Identifikationscodes (ID2) und der Identifikationsinformationen (X);
Erzeugen eines Alarmsignals (AS), wenn die gespeicherten Daten (SD) mit mindestens einem des ersten Identifikationscodes (ID1), des zweiten Identifikationscodes (ID2) und der Identifikationsinformationen (X) nicht übereinstimmen.

15. Vorrichtung nach Anspruch 14, wobei das Lesesystem (140) eine dritte Lesevorrichtung (130) umfasst, wobei der dritte Lesevorgang von der dritten Lesevorrichtung (130) ausgeführt wird.

## Revendications

1. Procédé d'association d'informations d'identification à un pneu (30) en cours de traitement, comprenant :
l'association d'une étiquette RFID (10) audit pneu (30) en cours de traitement ;
l'exécution, avant ou pendant la construction dudit pneu (30) en cours de traitement, d'une première opération de lecture de ladite étiquette RFID (10) afin d'obtenir un premier code d'identification (ID1) à partir de ladite étiquette RFID (10) ;
à la fin de ladite construction et avant la cuisson dudit pneu (30) en cours de traitement, l'exécution d'une deuxième opération de lecture afin d'obtenir un deuxième code d'identification (ID2) ;
**caractérisé en outre par** :
l'activation d'un processeur (100) afin d'effectuer une comparaison entre ledit premier code d'identification (ID1) et ledit deuxième code d'identification (ID2) ;
si ledit premier code d'identification (ID1) concorde avec ledit deuxième code d'identification (ID2), l'activation d'un dispositif d'écriture d'étiquette RFID (200) pour exécuter une opération d'écriture afin d'écrire des informations d'identification (X) dudit pneu (30) en cours de traitement sur ladite étiquette RFID (10).

2. Procédé selon la revendication 1, comprenant en outre :
l'association d'un autre code (FC) audit pneu (30) en cours de traitement ;
la lecture dudit autre code (FC) ;
dans lequel lesdites informations d'identification (X) dudit pneu (30) en cours de traitement comprennent ledit autre code (FC).

3. Procédé selon l'une quelconque des revendications précédentes, comprenant la génération d'un signal d'alarme (AS) dans au moins l'un des cas suivants :
ladite première opération de lecture ne permet pas d'obtenir ledit premier code d'identification (ID1) ;
ladite deuxième opération de lecture ne permet pas d'obtenir ledit deuxième code d'identification (ID2) ;
ledit premier code d'identification (ID1) ne concorde pas avec ledit deuxième code d'identification (ID2).

4. Procédé selon l'une quelconque des revendications précédentes, dans lequel ladite première opération de lecture est exécutée au moyen d'un premier dispositif de lecture (110) d'étiquette RFID et ladite deuxième opération de lecture est exécutée au moyen d'un deuxième dispositif de lecture (120) d'étiquette RFID.

5. Procédé selon l'une quelconque des revendications précédentes, dans lequel ladite étiquette RFID (10) est associée à un composant (20) d'un pneu, avant l'association dudit composant (20) à un pneu (30) en cours de traitement.

6. Procédé selon la revendication 5, dans lequel ledit premier dispositif de lecture (110) est situé dans une station de construction (300) qui exécute au moins une opération de construction dudit pneu (30) en cours de traitement.

7. Procédé selon l'une quelconque des revendications 1 à 4, dans lequel ladite étiquette RFID (10) est associée audit pneu (30) en cours de traitement.

8. Procédé selon l'une quelconque des revendications 4 à 7, dans lequel ledit deuxième dispositif de lecture (120) est situé en aval de ladite station de construction (300).

9. Procédé selon l'une quelconque des revendications précédentes, comprenant :
l'exécution, après le durcissement dudit pneu (30) en cours de traitement, d'une troisième opération de lecture afin d'obtenir des données stockées (SD) ;
l'activation dudit processeur (100) afin de comparer lesdites données stockées (SD) avec au moins l'un parmi ledit premier code d'identification (ID1), ledit deuxième code d'identification (ID2) et lesdites informations d'identification (X) ;
si lesdites données stockées (SD) ne concordent pas avec au moins l'un parmi ledit premier code d'identification (ID1), ledit deuxième code d'identification (ID2) et lesdites informations d'identification (X), la génération d'un signal d'alarme (AS).

10. Appareil d'association d'informations d'identification à un pneu (30) en cours de traitement, comprenant :
un système de lecture (140), configuré pour lire des étiquettes RFID ;
un processeur (100) configuré pour :
- activer ledit système de lecture (140) pour exécuter, avant ou pendant la construction d'un pneu (30) en cours de traitement, une première opération de lecture d'une étiquette RFID (10) afin d'obtenir un premier code d'identification (ID1) à partir de ladite étiquette RFID (10) ;
**caractérisé en ce que** le processeur (100) est en outre configuré pour :
- activer ledit système de lecture (140) pour exécuter, à la fin de ladite construction et avant la cuisson dudit pneu (30) en cours de traitement, une deuxième opération de lecture afin d'obtenir un deuxième code d'identification (ID2) ;
- effectuer une comparaison entre ledit premier code d'identification (ID1) et ledit deuxième code d'identification (ID2) ;
- si ledit premier code d'identification (ID1) concorde avec ledit deuxième code d'identification (ID2), activer un dispositif d'écriture d'étiquette RFID (200) pour exécuter une opération d'écriture afin d'écrire des informations d'identification (X) dudit pneu (30) en cours de traitement sur ladite étiquette RFID (10).

11. Appareil selon la revendication 10, dans lequel ledit système de lecture (140) comprend un premier dispositif de lecture (110) et un deuxième dispositif de lecture (120) ;
dans lequel ladite première opération de lecture est exécutée par ledit premier dispositif de lecture (110), et ladite deuxième opération de lecture est exécutée par ledit deuxième dispositif de lecture (120) ;
dans lequel ledit premier dispositif de lecture (110) est situé au niveau d'une station de construction (300) ;
dans lequel ledit deuxième dispositif de lecture (120) est situé en aval de ladite station de construction (300).

12. Appareil selon la revendication 10 ou 11, comprenant un dispositif de détection (150) configuré pour détecter un autre code (FC) associé audit pneu (30) en cours de traitement ;
dans lequel ledit processeur (100) est configuré pour :
- activer ledit dispositif de détection (150) afin de détecter ledit autre code (FC);
- fournir ledit autre code (FC) audit dispositif d'écriture d'étiquette RFID (200) afin d'inclure ledit autre code (FC) dans lesdites informations d'identification (X).

13. Appareil selon la revendication 10 ou 11, dans lequel ledit processeur (100) est configuré pour générer un signal d'alarme (AS) dans au moins l'un des cas suivants :
ladite première opération de lecture ne permet pas d'obtenir ledit premier code d'identification (ID1) ;
ladite deuxième opération de lecture ne permet pas d'obtenir ledit deuxième code d'identification (ID2) ;
ledit premier code d'identification (ID1) ne concorde pas avec ledit deuxième code d'identification (ID2).

14. Appareil selon l'une quelconque des revendications 10 à 13, dans lequel ledit processeur (100) est configuré pour :
activer ledit système de lecture (140) pour exécuter, après le durcissement dudit pneu (30) en cours de traitement, une troisième opération de lecture afin d'obtenir des données stockées (SD) ;
comparer lesdites données stockées (SD) avec au moins l'un parmi ledit premier code d'identification (ID1), ledit deuxième code d'identification (ID2) et lesdites informations d'identification (X) ;
générer un signal d'alarme (AS) si lesdites données stockées (SD) ne concordent pas avec au moins l'un parmi ledit premier code d'identification (ID1), ledit deuxième code d'identification (ID2) et lesdites informations d'identification (X).

15. Appareil selon la revendication 14, dans lequel ledit système de lecture (140) comprend un troisième dispositif de lecture (130), ladite troisième opération de lecture étant exécutée par ledit troisième dispositif de lecture (130).
